## Europäisches Patentamt
## European Patent Office
## Office européen des brevets

(19)

(11) Veröffentlichungsnummer: **0 210 161**
**B1**

(12) **EUROPÄISCHE PATENTSCHRIFT**

(45) Veröffentlichungstag der Patentschrift:
09.08.89

(51) Int. Cl.⁴: **A01G 25/09, F03B 1/00**

(21) Anmeldenummer: 86890189.3

(22) Anmeldetag: 24.06.86

(54) Verstellturbine.

(30) Priorität: 25.06.85 AT 1890/85

(43) Veröffentlichungstag der Anmeldung:
28.01.87 Patentblatt 87/5

(45) Bekanntmachung des Hinweises auf die Patenterteilung:
09.08.89 Patentblatt 89/32

(84) Benannte Vertragsstaaten:
DE FR GB IT NL SE

(56) Entgegenhaltungen:
EP-A- 0 132 801
AT-B- 352 460
AT-B- 364 566
NL-B- 67 946
US-A- 3 841 561

(73) Patentinhaber: **RÖHREN-UND PUMPENWERK RUDOLF BAUER AKTIENGESELLSCHAFT, A-8570 Voitsberg(AT)**

(72) Erfinder: **Wolfbauer, Wilhelm, Dipl.-Ing., Lannerweg 1, A-8072 Fernitz(AT)**
Erfinder: **Podesser, Franz Dietmar, Bergmanngasse 13, A-8570 Voitsberg(AT)**

(74) Vertreter: **Piso, Eberhard, Dr. et al, Patentanwälte Dipl.-Ing. Herbert C.E. Krause Dr. Eberhard Piso Gluckgasse 1 Fach 328, A-1010 Wien 1(AT)**

## Beschreibung

Die Erfindung betrifft eine Turbine, vorzugsweise für Beregnungsgeräte, mit einem um eine Antriebsachse in einem etwa ringförmigen Raum des Turbinengehäuses drehbar angeordneten Radkranz mit auf diesem angeordneten Laufschaufeln, einer in der Eintrittsöffnung angeordneten variablen Düse und einer Steuereinrichtung für die Steuerung des Wasserzuflusses, die einen Teil der Düse bildet.

Aus der AT-B 352 460 ist eine Freistrahlturbine für eine ortsveränderliche Beregnungseinrichtung bekannt, bei welcher zur Änderung der Turbinendrehzahl die Richtung des Freistrahls steuerbar ist. Der aus der Turbinendüse austretende Wasserstrahl soll durch einen in den Strahl eingreifenden Strahlablenker geteilt werden, sodaß dieser nicht mehr voll gebündelt auf die Turbinenschaufeln trifft und nur mehr ein Teil der im Strahl enthaltenen Energie genutzt wird.

Außerdem bewirkt der vor die Düse geschobene Strahlablenker bei zunehmendem Eingriff in den Strahl ein unkontrolliertes Verwirbeln und Zerstäuben desselben, sodaß auf diese Art und Weise eine gleichmäßige Drehzahlregelung über einen großen Bereich nicht erreicht werden kann.

Durch die gleichbleibend hohe Strömungsgeschwindigkeit in der Düse und die anschließende Verwirbelung durch den Strahlablenker, verbunden mit Strömungs- und Reibungsverlusten, kommt es zu einem unerwünscht starken Druckabfall in der Turbine.

Weiters wird vorgeschlagen, zur Richtungsänderung des Freistrahls die Düse selbst schwenkbar zu lagern, was jedoch bei Turbinen für diesen Verwendungszweck einen zu hohen technischschen Aufwand darstellt.

Aus der AT-B 364 566 ist eine Turbine für eine Berieselungsvorrichtung nach dem Oberbegriff des Anspruchs 1 bekannt, wobei das Gehäuse der Turbine eine im wesentlichen tangentiale Zuleitung aufweist, und zur Drehzahlsteuerung der Turbine in Abhängigkeit von der Schlaucheinziehgeschwindigkeit eine Steuereinrichtung vorgesehen ist. Diese besteht aus einer im Mündungsbereich der Zuleitung drehbar gelagerten Steuerklappe, mittels welcher einerseits der Mündungsquerschnitt der Zuleitung und andererseits die Strahlrichtung des in die Turbine eingeführten Wassers veränderbar ist.

Aus der AT-B 377 676 ist eine Wasserturbine, vorzugsweise für Beregnungsgeräte, bekannt, bei welcher im Bereich der Eintrittsöffnung und vorzugsweise auch im Bereich des benachbarten Abschnittes der Wasserführungsleitung sich ein flexibler, den Durchflußquerschnitt bestimmender Wandteil befindet, der mittels eines von außen an diesen angreifenden Nocken verstellbar ist.

Durch diese Ausbildung ist eine Veränderung des Eintrittsimpulses möglich, die zweite der beiden Antriebskomponenten, nämlich die Schleppwirkung kann allerdings nicht beeinflußt werden.

Dadurch ist eine optimale Abstimmung zwischen Eintrittsquerschnitt und Ringspalt bezüglich geringer Stoßverluste nicht möglich.

Der Erfindung liegt die Aufgabe zugrunde, mit einfachen Mitteln eine Turbine der eingangs erwähnten Gattung zu schaffen, deren Drehzahl bei einem guten Wirkungsgrad und nur geringen Druckverlusten über einen großen Bereich gleichmäßig regelbar ist.

Die Erfindung löst die gestellte Aufgabe dadurch, daß die Steuereinrichtung im ringförmigen Raum angeordnet ist, daß sie einen Teil der Wandung des ringförmigen Raumes bildet und daß die Steuereinrichtung sowohl den Ringspalt als auch den Querschnitt der Düse in gemeinsamer Abhängigkeit voneinander regelt.

Dadurch wird erreicht, daß, von einer höchsten Drehzahl ausgehend, durch eine kontinuierliche und fein regelbare Querschnittvergrößerung der Düse die Strömungsgeschwindigkeit des Arbeitswassers unter Beibehaltung derselben Strahlrichtung konstant abnimmt, d.h. der Impuls des Strahles auf die Schaufeln des Laufrades wird schwächer, was in direkter Beziehung zu einer Drehzahländerung steht.

Die der Düse nachgeschaltete Leiteinrichtung bewirkt, daß der Strahl nach dem Auftreffen auf die Schaufeln ohne größere Verwirbelungen bis zur Austrittsöffnung geführt wird. Dabei erweist es sich sowohl für die Feinregelung, als auch für den Wirkungsgrad der Turbine als günstig, den Ringspalt zwischen Leiteinrichtung und Laufrad vom Düsenquerschnitt abhängig zu machen.

Eine Ausgestaltung der Erfindung besteht darin, daß sich die Steuereinrichtung von der Eintrittsöffnung bis zur Austrittsöffnung des Turbinengehäuses hin erstreckt und vorzugsweise einstückig ist.

Die Steuereinrichtung ist in einer Ausgestaltung der Erfindung um eine Achse verschwenkbar, die in etwa gegenüber der Düse im Bereich der Austrittsöffnung des Turbinengehäuses angeordnet ist.

In einer weiteren Ausgestaltung der Erfindung ist ferner die Steuereinrichtung eine dem Krümmungsradius des Laufradaußendurchmessers nachgeformte, breitflächige Platte mit einem in Richtung der Längsachse der Platte, gegenüber der Schwenkachse angeordneten fingerförmigen Fortsatz.

Nach einer weiteren Ausgestaltung der Erfindung ist der fingerförmige Fortsatz im vorzugsweise vom Turbinengehäuse gebildeten ortsfesten Teil der Düse zwischen zwei parallelen Wänden beweglich angeordnet. Die Oberseite des fingerförmigen Fortsatzes gleicht in der obersten Schwenklage der Steuereinrichtung spiegelbildlich dem ihr gegenüberliegenden Teil der Düse.

Eine Ausgestaltung der Erfindung besteht ferner darin, daß der fingerförmige Fortsatz unterhalb der Platte als eine Versteifungsrippe ausgebildet ist und schließlich darin, daß die Versteifungsrippe ebenso wie die Platte mit der Bohrung der Schwenkachse direkt verbunden sind.

Die Erfindung ist anhand eines in der Zeichnung dargestellten Ausführungsbeispieles näher erläutert.

Es zeigen die Fig. 1 einen Querschnitt durch die Turbine senkrecht zur Laufradachse, die Fig. 2 einen Schnitt entlang der Linie II-II und die Fig. 3 einen Schnitt entlang der Linie III-III.

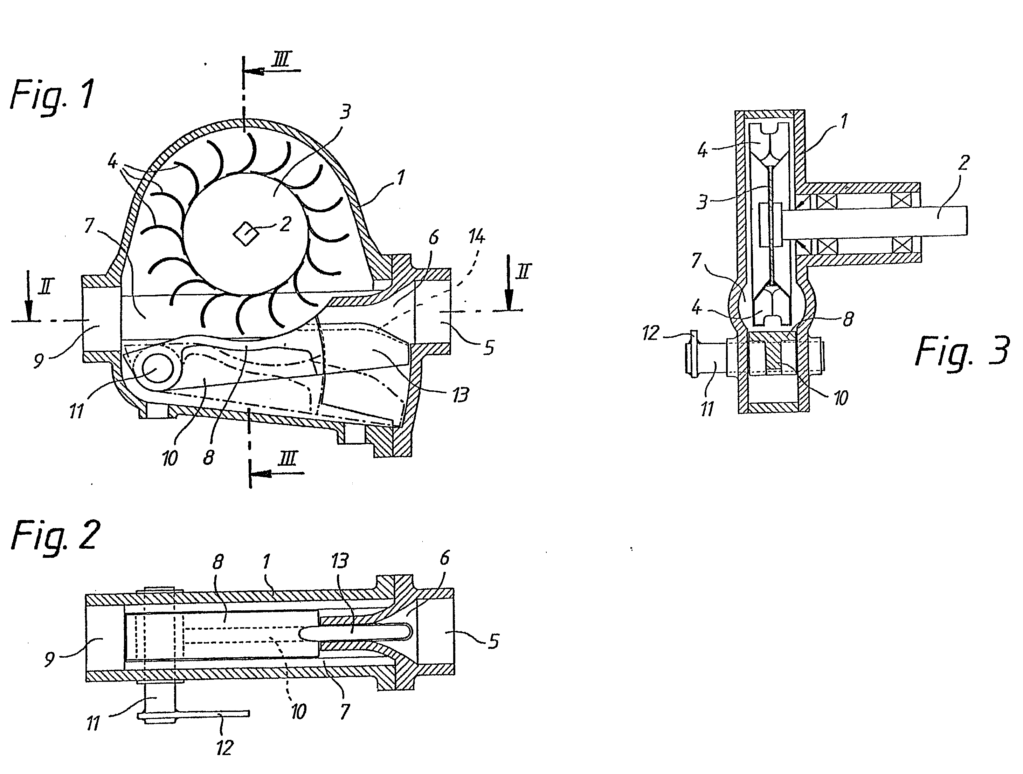

In einem Turbinengehäuse 1 ist eine Turbinenwelle 2 drehbar gelagert, auf deren innerem Ende das Turbinenlaufrad, bestehend aus einem Radkranz 3 mit am Umfang angeordneten becherförmigen Laufschaufeln 4, wie an sich von Pelton-Turbinen bekannt, sitzt. Das Arbeitswasser gelangt über eine Eintrittsöffnung 5 in das Innere der Turbine, wird durch die Düse 6 gebündelt bzw. beschleunigt und trifft mittig auf die Laufschaufeln 4. Der Wasserstrahl gibt durch Umlenkung seine Energie an das Laufrad ab, die dabei auftretende Verwirbelung wird durch einen rohrförmigen Kanal 7 im Turbinengehäuse 1 sowie von einer Leiteinrichtung 8 weitestgehend geordnet, sodaß ein strömungsgünstiger Wasserdurchtritt bis hin zur Austrittsöffnung 9 gewährleistet ist. Die Leiteinrichtung 8, in der Draufsicht gemäß Fig. 2 eine rechteckige Platte, die sich im Längs- und Querschnitt der Laufradkontur anschmiegt, an der Unterseite durch eine Rippe 10 versteift, erstreckt sich von der Düse 6 bis hin zur Austrittsöffnung 9.

Die Leiteinrichtung 8 ist im Bereich der Austrittsöffnung 9 im Turbinengehäuse 1 gelagert und kann mittels einer Welle 11, die durch das Turbinengehäuse 1 geführt ist, von außen über einen Hebel 12 oder einen, in der Zeichnung nicht dargestellten, Stellmotor verschwenkt werden.

In Richtung zur Eintrittsöffnung 5 hin setzt sich die Leiteinrichtung 8 mit einem Finger 13 fort. Wie in Figur 1 ersichtlich, weist dieser die Kontur der Düse 6 auf, mit einer halbrunden Rille 14 längs besagter Kontur. Der Finger 13 ragt vollständig in die Düse 6, die in der Längsrichtung geschlitzt und nach unten offen ist und gleitet bei einem Verschwenken der Leiteinrichtung 8 in diesem Schlitz.

Wie aus der Fig. 1 ersichtlich ist, ergibt sich aufgrund der in Vollinie gezeichneten Stellung des Fingers 13 ein kreisrunder, kleinster Querschnitt für die Düse 6 bzw. in der strichpunktierten Stellung ein ovaler, größter Querschnitt. Da, wie bereits erwähnt, der Finger 13 mit der Leiteinrichtung 8 starr verbunden ist, ändert sich gleichzeitig mit dem Querschnitt der Düse 6 auch der Ringspalt zwischen der Leiteinrichtung 8 und den Laufschaufeln 4, wodurch eine feine Drehzahlregelung über den gesamten Bereich erreicht werden kann.

Der Druckverlust bleibt infolge der strömungstechnisch günstigen Führung des Arbeitswassers durch die Turbine gering.

Da die Turbine während des Betriebes vollständig mit Wasser gefüllt ist, ergeben sich daraus die positiven Eigenschaften:
Eine hohe Drehzahlsteifigkeit (bei Belastung ein sehr geringes Absinken der Drehzahl) bzw. bei einer geringen Belastung kein Durchgehen der Turbine. Überdies bringt sie ihre größte Leistung bei einer niedrigen Drehzahl, sodaß für den eingangs erwähnten Verwendungszweck kein aufwendiges Getriebe erforderlich ist. Die Turbine ist aufgrund ihrer Bauart in Kombination mit der einfachen Verstellbarkeit unempfindlich gegen Sand und Schmutz im Arbeitswasser, wodurch aufwendige Filter eingespart werden können.

Selbstverständlich kann die erfindungsgemäße Turbine bei einem gleichbleibend guten Wirkungsgrad in jeder beliebigen Lage am Gerät montiert werden, also auch 180° zu der in der Fig. 1 gezeigten Stellung verdreht.

## Patentansprüche

1. Turbine, vorzugsweise für Beregnungsgeräte, mit einem um eine Antriebsachse in einem etwa ringförmigen Raum des Turbinengehäuses drehbar angeordneten Radkranz, mit auf diesem angeordneten Laufschaufeln, einer in der Eintrittsöffnung angeordneten variablen Düse und einer Steuereinrichtung für die Steuerung des Wasserzuflusses, die einen Teil der Düse bildet, dadurch gekennzeichnet, daß die Steuereinrichtung im ringförmigen Raum angeordnet ist, daß sie einen Teil der Wandung des ringförmigen Raumes bildet und daß die Steuereinrichtung sowohl den Ringspalt als auch den Querschnitt der Düse (6) in gemeinsamer Abhängigkeit voneinander regelt.

2. Turbine nach Anspruch 1, dadurch gekennzeichnet, daß sich die Steuereinrichtung von der Eintrittsöffnung (5) bis zur Austrittsöffnung (9) des Turbinengehäuses (1) hin erstreckt und vorzugsweise einstückig ist.

3. Turbine nach Anspruch 1 und 2, dadurch gekennzeichnet, daß die Steuereinrichtung um eine zur Antriebsachse der Turbine (2) parallele Achse (11) verschwenkbar ist.

4. Turbine nach den Ansprüchen 1 bis 3, dadurch gekennzeichnet, daß die Schwenkachse (11) der Steuereinrichtung in etwa gegenüber der Düse (6) im Bereich der Austrittsöffnung (9) des Turbinengehäuses (1) angeordnet ist.

5. Turbine nach den Ansprüchen 1 bis 4, dadurch gekennzeichnet, daß die Steuereinrichtung eine dem Krümmungsradius des Laufradaußendurchmessers nachgeformte breitflächige Platte (8) mit einem in Richtung der Längsachse der Platte gegenüber der Schwenkachse angeordneten fingerförmigen Fortsatz (13) ist.

6. Turbine nach den Ansprüchen 1 bis 5, dadurch gekennzeichnet, daß der fingerförmige Fortsatz (13) im vorzugsweise vom Turbinengehäuse (1) gebildeten ortsfesten Teil der Düse zwischen zwei parallelen Wänden beweglich angeordnet ist.

7. Turbine nach den Ansprüchen 1 bis 6, dadurch gekennzeichnet, daß die Oberseite des fingerförmigen Fortsatzes (13) in der obersten Schwenklage der Steuereinrichtung dem genenüberliegenden Teil der Düse spiegelbildlich gleicht.

8. Turbine nach einem der Ansprüche 1 bis 7, dadurch gekennzeichnet, daß der fingerförmige Fortsatz (13) unterhalb der Platte als eine Versteifungsrippe (10) ausgebildet ist.

9. Turbine nach einem der Ansprüche 1 bis 8, dadurch gekennzeichnet, daß die Versteifungsrippe (10) ebenso wie die Platte (8) mit der Bohrung der Schwenkachse (11) direkt verbunden ist.

## Revendications

1. Turbine, de préférence pour des appareils d'arrosage, comprenant une jante montée tournante autour d'un arbre d'entraînement dans un volume sensiblement annulaire du carter de la turbine, des aubes disposées sur celle-ci, une buse variable disposée dans le canal d'entrée, et un dispositif de commande qui agit sur l'arrivée d'eau et qui constitue une partie de la buse, caractérisée par le fait que le dispositif de commande est disposé dans le volume annulaire, par le fait qu'il constitue une partie de la paroi du volume annulaire, et par le fait que le dispositif de commande règle aussi bien l'interstice annulaire que la section transversale de la buse (6) en les faisant dépendre à la fois l'un de l'autre.

2. Turbine selon la revendication 1, caractérisée par le fait que le dispositif de commande s'étend depuis le canal d'entrée (5) jusqu'au canal de sortie (9) du carter (1) de la turbine, et qu'il est de préférence d'un seul tenant.

3. Turbine selon la revendication 1 et 2, caractérisée par le fait que le dispositif de commande peut pivoter autour d'un axe (11) qui est parallèle à l'axe d'entraînement (2) de la turbine.

4. Turbine selon les revendications 1 à 3, caractérisée par le fait que l'axe de pivotement (11) du dispositif de commande est disposé sensiblement en face de la buse (6) dans la région du canal de sortie (9) du carter (1) de la turbine.

5. Turbine selon les revendications 1 à 4, caractérisée par le fait que le dispositif de commande est une plaque large (8) dont la forme suit le rayon de courbure du diamètre extérieur du rotor, et qui comprend un prolongement en forme de doigt (13) disposé dans la direction de l'axe longitudinal de la plaque, à l'opposé de l'axe de pivotement.

6. Turbine selon les revendications 1 à 5, caractérisée par le fait que le prolongement en forme de doigt (13) est monté mobile entre deux parois parallèles dans la partie fixe de la buse qui est de préférence formée par le carter (1) de la turbine.

7. Turbine selon les revendications 1 à 6, caractérisée par le fait que le côté supérieur du prolongement en forme de doigt (13), lorsqu'il est dans la position supérieure de pivotement du dispositif de commande, est symétriquement identique à la partie de la buse qui lui fait face.

8. Turbine selon l'une des revendications 1 à 7, caractérisée par le fait que le prolongement en forme de doigt (13) est réalisé au-dessous de la plaque sous la forme d'une nervure de raidissement (10).

9. Turbine selon l'une des revendications 1 à 8, caractérisée par le fait que la nervure de raidissement (10), tout comme la plaque (8), est directement reliée au perçage de l'axe de pivotement (11).

## Claims

1. Turbine, preferably for watering devices with a wheel rim arranged rotatably about a drive axle in a substantially annular space of the turbine housing with running paddles arranged on this, a variable nozzle arranged in the entry opening and a control unit for the control of the water feed which constitutes a part of the nozzle, characterised in that the control unit is arranged in the annular space, that it forms a part of the wall of the annular space and that the control unit controls both the annular slot and also the cross section of the nozzle (6) in common.

2. Turbine according to Claim 1, characterised in that the control unit extends from the entry opening (5) up to the outlet opening (9) of the turbine housing (1) and preferably is in one piece.

3. Turbine according to Claim 1 and 2, characterised in that the control unit is swingable about an axis (11) parallel to the drive axis of the turbine (2).

4. Turbine according to Claims 1 to 3, characterised in that the rotational axis of the control unit (11) is arranged substantially opposite the nozzle (6) in the region of the outlet opening (9) of the turbine housing (1).

5. Turbine according to Claims 1 to 4, characterised in that the control unit is a broad surface plate shaped to the radius of curvature of the running wheel external diameter (8) with a finger shaped projection (13) arranged opposite the pivotal axis in a direction of the longitudinal axis of the plate.

6. Turbine according to Claims 1 to 5, characterised in that the finger shaped projection (13) is arranged movably between two parallel walls in a fixed position, part of the nozzle formed preferably by the turbine housing (1).

7. Turbine according to Claims 1 to 6, characterised in that the upper side of the finger shaped projection (13) in the uppermost swung up position of the control unit matches in mirror fashion the oppositely lying part of the nozzle.

8. Turbine according to one of Claims 1 to 7, characterised in that the finger shaped projection (13) is arranged underneath the plate as a stiffening rib (10).

9. Turbine according to one of Claims 1 to 8, characterised in that the stiffening rib (10), as well as the plate (8), is directly connected with the bore of the swinging axis (11).

Fig. 1

Fig. 2

Fig. 3